# EUROPÄISCHE PATENTSCHRIFT

(11) **EP 4 013 973 B1**
(45) Veröffentlichungstag und Bekanntmachung des Hinweises auf die Patenterteilung: **17.04.2024**
(21) Anmeldenummer: 20753686.3
(22) Anmeldetag: 24.07.2020
(51) Int. Cl.: F16D 33/06

(54) **LEISTUNGSÜBERTRAGUNGSSYSTEM**
POWER TRANSMISSION SYSTEM
SYSTÈME DE TRANSMISSION DE PUISSANCE

(30) Priorität: 14.08.2019 DE 102019121852
(43) Veröffentlichungstag der Anmeldung: 22.06.2022
(73) Patentinhaber: Voith Patent GmbH, 89522 Heidenheim (DE)
(72) Erfinder: BORG, Tobias, 74599 Wallhausen (DE); SPONHOLZ, Hubert, 73491 Neuler (DE); BOHNET, Wilfried, 74589 Satteldorf (DE)
(74) Vertreter: Voith Patent GmbH - Patentabteilung
(86) Internationale Anmeldenummer: PCT/EP2020/070899
(87) Internationale Veröffentlichungsnummer: WO 2021/028190

(56) Entgegenhaltungen:
- WO-A1-2016/046963
- DE-A1-102007 039 856
- US-A1- 2018 195 594

## Beschreibung

Die vorliegende Erfindung betrifft ein Leistungsübertragungssystem, insbesondere ein hydrodynamisches Getriebe in Form eines hydrodynamischen Drehzahl-/Drehmomentwandlers, umfassend eine Antriebswelle, welche mit einem Pumpenrad drehfest verbunden ist, und eine Abtriebswelle, welche mit einem Turbinenrad drehfest verbunden ist.

Ein hydrodynamisches Getriebe ist mit Verlusten verbunden. Um im Betrieb derartige Verluste zu senken, sind Getriebe bekannt, zum Beispiel aus der WO 02/14716 A1, bei welchen das Pumpenrad mit dem Turbinenrad mittels einer Kupplung verbunden werden kann, so dass die Leistung von der Antriebswelle an die Abtriebswelle ohne den hydrodynamischen Anteil übertragen werden kann.

Im Stand der Technik ist die WO 2016/046963 A1 bekannt, die ein Leistungsübertragungssystem mit Merkmalen aus dem Oberbegriff dieser Anmeldung offenbart.

Weiterhin sind im Stand der Technik die DE 10 207 039856 A1 und die US 2018/195594 A1 bekannt.

Um zwischen dem Pumpenrad und dem Turbinenrad zu koppeln, wird üblicherweise ein Schiebestück verwendet, welches eine formschlüssige Verbindung zwischen Pumpenrad und Turbinenrad herstellt. Eine Verlagerung dieses Schiebestücks wird in bekannten Getrieben über einen am Abtriebswellenende angeordneten Hydraulikzylinder erzeugt, wobei der Hydraulikzylinder dadurch betätigt wird, dass Öl in den zusammen mit der Abtriebswelle rotierenden Hydraulikzylinder geleitet wird und die Fliehkraft des Öls ausgenutzt wird, um das Schiebestück zu verlagern. Folglich bedarf es einer gewissen Rotationsgeschwindigkeit der Abtriebswelle, um das Schiebestück zu verlagern.

In der Praxis hat sich gezeigt, dass des Öfteren Bauformen von hydrodynamischen Getrieben erforderlich sind, bei welchen kein frei zugängliches Wellenende bzw. kein ausreichender Bauraum am Abtriebswellenende zum Anordnen des Hydraulikzylinders bzw. eines Federspeichers oder von Aktuatoren vorhanden ist. Ferner sind die bekannten Hydraulikzylinder zu diesem Zweck derart ausgebildet, dass ein darin angeordneter Kolben im Öl mit der Drehzahl der Abtriebswelle rotiert, wodurch ebenfalls Verluste entstehen.

Es ist daher die Aufgabe der vorliegenden Erfindung, ein Leistungsübertragungssystem bereitzustellen, welches die Nachteile des bekannten Stands der Technik überwindet und insbesondere Bauraumanforderungen zum Betätigen einer derartigen Kupplung optimiert.

Diese Aufgabe wird erfindungsgemäß durch ein Leistungsübertragungssystem, insbesondere hydrodynamisches Getriebe, gemäß Anspruch 1 gelöst.

Dabei sei bereits an dieser Stelle erwähnt, dass das Leistungsübertragungssystem sowohl beispielsweise als hydrodynamische Kupplung als auch als hydrodynamischer Drehmomentwandler ausgebildet sein kann, welcher neben dem Pumpenrad und dem Turbinenrad ferner ein Leitrad umfassen kann. Besonders bevorzugt findet die erfindungsgemäße Lösung bei einem hydrodynamischen Drehzahl-/Drehmomentwandler Anwendung.

Der hydrodynamische Drehzahl-/Drehmomentwandler umfasst zumindest ein Pumpenrad, ein Turbinenrad und ein Leitrad. Der Wandler kann jedoch auch einstufig, d.h. jedes der Elemente besteht nur aus einem Schaufelkranz oder aber mehrstufig ausgeführt sein. Im letztgenannten Fall besteht zumindest eines der Schaufelräder - Pumpenrad, Turbinenrad oder Leitrad aus mehreren Schaufelkränzen, zwischen denen im Kreislauf ein anderes der Hauptelementes angeordnet ist.

Im Gegensatz zu dem bekannten Stand der Technik eines hydrodynamischen Drehzahl-/Drehmomentwandlers mit Überbrückung, bei welchem die Abtriebswelle als Hohlwelle ausgebildet ist, um eine Verlagerungseinrichtung zur Betätigung der Kupplung hindurch zu führen, kann es die vorliegende Erfindung ermöglichen, die Abtriebswelle im Wesentlichen als Vollwelle auszubilden. Hierdurch kann beispielsweise ein Durchmesser der Abtriebswelle, bei im Vergleich zum Stand der Technik gleich bleibender Stabilität, verringert werden. Folglich kann es die folgende Erfindung erlauben, eine einfacher ausgestaltete und somit kostengünstiger herzustellende Abtriebswelle verwenden zu können.

Die Verlagerungseinrichtung gemäß der vorliegenden Erfindung, welche zumindest entlang der axialen Erstreckung der Abtriebswelle radial außerhalb der Abtriebswelle angeordnet ist, bietet ferner den Vorteil, dass ein Abstand zwischen Antriebswelle und Abtriebswelle im Vergleich zum Stand der Technik reduziert werden kann, wodurch ein gesamter Bauraum des Leistungsübertragungssystems reduziert werden kann.

Insbesondere kann die Kupplung hierbei dazu eingerichtet sein, in einer kraftübertragenden Weise einen Spalt zu überbrücken, welcher sich in Bezug auf eine Rotationsachse des Turbinenrads in einer radialen Richtung zwischen dem Pumpenrad und dem das Pumpenrad radial außen umgebenden Turbinenrad erstreckt.

Natürlich ist es dabei denkbar, dass das Pumpenrad mit der Antriebswelle bzw. das Turbinenrad mit der Abtriebswelle einstückig, stoffschlüssig und/oder formschlüssig verbunden ist/sind.

In einer Weiterbildung der vorliegenden Erfindung kann die Verlagerungseinrichtung wenigstens eine mit der Kupplung verbundene Stelleinheit umfassen, welche dazu eingerichtet ist, zwischen einer vorgeschobenen Position, welche dem eingegriffenen Zustand der Kupplung zugeordnet ist, und einer zurückgezogenen Position zu verlagern, welche dem entkoppelten Zustand der Kupplung zugeordnet ist, wobei die Stelleinheit relativ zu einem Gehäuse des Leistungsübertragungssystems fest verbunden ist. Das heißt, die Stelleinheit kann von der Abtriebswelle drehentkoppelt angeordnet sein, so dass sich die Stelleinheit nicht mit der Antriebswelle und/oder der Abtriebswelle dreht. Ferner kann die Stelleinheit derart angeordnet sein, dass sie zwar in einer radialen Richtung außerhalb der Abtriebswelle, aber in einer axialen Richtung innerhalb der Wellenenden der Abtriebswelle angeordnet ist. Dies kann eine besonders kompakte Bauform des Leistungsübertragungssystems ermöglichen. Ferner kann ein festes, das heißt nicht mit der Abtriebswelle mitdrehendes, Anordnen der Stelleinheit Verluste des Leistungsübertragungssystems reduzieren, beispielsweise aufgrund einer reduzierten rotierenden Masse.

Dabei kann die Stelleinheit als, insbesondere hydraulisch betätigbare, Kolben-Zylinder-Anordnung ausgebildet sein. So kann beispielsweise der Zylinder der Kolben-Zylinder-Anordnung fest mit dem Gehäuse verbunden sein, wobei eine Zuführleitung, über welche Arbeitsmedium, beispielsweise Öl, in den Zylinder eingespeist und aus diesem abgeführt werden kann, als durch das Gehäuse verlaufender Kanal, zum Beispiel als Bohrung, ausgebildet sein kann. Es ist jedoch auch denkbar, die Kolben-Zylinder-Anordnung derart mit dem Gehäuse zu verbinden, dass der Zylinder mit wenigstens einer Schlauchleitung zum Transport des Arbeitsmediums verbunden werden kann.

Vorteilhafterweise kann eine Betätigungsrichtung der Stelleinheit, entlang welcher sich die Stelleinheit zwischen der vorgeschobenen Position und der zurückgezogenen Position verlagert, im Wesentlichen parallel zu einer Rotationsachse der Abtriebswelle und/oder der Antriebswelle sein. Durch eine derartige Anordnung kann die radial außerhalb der Abtriebswelle angeordnete Verlagerungseinrichtung auf einfache Weise parallel zu der Rotationsachse der Abtriebswelle verlagert werden. In einer vorteilhaften Ausführungsform kann die Stelleinheit konzentrisch zu der Abtriebswelle, beispielsweise als Ringzylinder ausgebildet sein, so dass eine parallele Betätigungsrichtung der Stelleinheit zu der Rotationsachse der Abtriebswelle erreicht werden kann.

In einer möglichen Ausführungsform der vorliegenden Erfindung kann die Stelleinheit ein erstes und ein zweites Stellglied umfassen, wobei das erste Stellglied dazu eingerichtet ist, die Kupplung in die eingegriffene Position zu verlagern, und das zweite Stellglied dazu eingerichtet ist, die Kupplung in die entkoppelte Position zu verlagern, und/oder die Stelleinheit kann als wenigstens ein doppeltwirkendes Stellglied, beispielsweise als eine doppeltwirkende Kolben-Zylinder-Anordnung, ausgebildet sein, welche sowohl dazu eingerichtet ist, die Kupplung in die eingegriffene Position zu verlagern, als auch dazu eingerichtet ist, die Kupplung in die entkoppelte Position zu verlagern. Insbesondere die Ausbildung der Stelleinheit als doppeltwirkendes Stellglied kann eine Hin- und Her-Bewegung der Kupplung bei möglichst geringem Bauraum ermöglichen. Wie bereits voranstehend erwähnt, können auch für das doppeltwirkende Stellglied die Zu- bzw. Abführleitungen für ein entsprechendes Arbeitsmedium als Kanäle in dem Gehäuse ausgebildet sein.

Ferner kann die Stelleinheit wenigstens zwei Stellglieder umfassen, welche entlang einer Umfangsrichtung der Abtriebswelle zueinander im Wesentlichen gleichbeabstandet angeordnet sind. So können beispielsweise in dem Fall, dass die Stelleinheit genau zwei Stellglieder umfasst, die beiden Stellglieder in Bezug auf die Rotationsachse der Abtriebswelle diametral gegenüberliegend angeordnet sein. Durch das Vorsehen einer Mehrzahl von Stellgliedern kann ein Verkippen der Verlagerungseinrichtung bzw. der daran angeordneten Kupplung reduziert oder sogar verhindert werden, so dass es möglich sein kann, einen Verschleiß der zugeordneten Bauteile und/oder einen benötigten Kraftaufwand zum Betätigen der Verlagerungseinrichtung bzw. der Kupplung zu reduzieren.

Erfindungsgemäß umfasst die Verlagerungseinrichtung wenigstens eine Lagereinrichtung welche einen kupplungsseitigen Abschnitt der Verlagerungseinrichtung relativ zu einem gehäuseseitigen Abschnitt der Verlagerungseinrichtung drehbar lagert. In anderen Worten kann die Verlagerungseinrichtung einen Abschnitt, nämlich den gehäuseseitigen Abschnitt, welcher im Betrieb des Leistungsübertragungssystems nicht zusammen mit der Abtriebswelle dreht, ungeachtet dessen, ob die Kupplung eingegriffen oder aus gekoppelt ist, und einen Abschnitt aufweisen, nämlich den kupplungsseitigen Abschnitt, welcher im Betrieb des Leistungsübertragungssystems und bei eingegriffener Kupplung zusammen mit der Abtriebswelle bzw. zusammen mit der Antriebswelle rotiert. In diesem Zusammenhang kann die Lagereinrichtung dazu eingerichtet sein, eine Kraft zwischen dem kupplungsseitigen Abschnitt der Verlagerungseinrichtung und dem gehäuseseitigen Abschnitt der Verlagerungseinrichtung zu übertragen, welche im Wesentlichen parallel zu einer Drehachse der Lagereinrichtung verläuft. Somit kann es möglich sein, eine Betätigung der Stelleinheit von dem gehäuseseitigen Abschnitt auf den kupplungsseitigen Abschnitt zu übertragen und dadurch die Kupplung in den eingegriffenen oder den entkoppelten Zustand zu überführen und zugleich eine rotatorische Trennung des gehäuseseitigen Abschnitts von dem kupplungsseitigen Abschnitt aufrechtzuerhalten. Insbesondere kann die Lagereinrichtung derart ausgebildet sein, dass sie lediglich eine Bewegung entlang eines einzigen Freiheitsgrads zulässt. In dem Fall einer bevorzugten Ausführungsform kann die Lagereinrichtung so lediglich eine Rotation des kupplungsseitigen Abschnitts zu dem gehäuseseitigen Abschnitt der Verlagerungseinrichtung um eine Rotationsachse zulassen, welche im Wesentlichen parallel, insbesondere koaxial, zu der Rotationsachse der Abtriebswelle ist. Ferner kann in dem Fall der bevorzugten Ausführungsform die Kraft, welche von dem gehäuseseitigen Abschnitt auf den kupplungsseitigen Abschnitt der Verlagerungseinrichtung zu übertragen ist, im Wesentlichen parallel zu der Rotationsachse des durch die Lagereinrichtung freigegebenen/gelagerten Freiheitsgrads verlaufen. Die Lagereinrichtung zwischen kupplungsseitigem Abschnitt und gehäuseseitigem Abschnitt der Verlagerungseinrichtung kann insbesondere außerhalb eines Raums, welcher zwischen dem Pumpenrad und dem Turbinenrad definiert ist, vorteilhafterweise zu der Stelleinheit unmittelbar benachbart, weiter bevorzugt als Teil einer mit einem Kolben der Kolben-Zylinder-Anordnung, als welche die Stelleinheit ausgebildet ist, verbundene Kolbenstange, angeordnet sein.

Vorteilhafterweise kann die Lagereinrichtung als hydrodynamisches Gleitlager ausgebildet sein. Ein hydrodynamisches Gleitlager, in dem sich der Schmiermittel-Druck bei Betrieb des Lagers an derjenigen Stelle, wo die Kraftübertragung zwischen den beiden Lagerteilen erfolgt, selbsttätig bilden kann, kann, beispielsweise im Vergleich zu Wälzlagern, die Vorteile bieten, dass es auch bei höchsten Drehzahlen geräuscharm laufen kann, wobei es vergleichsweise einen geringeren Bauraum einnimmt. Ein hydrodynamisches Gleitlager ist üblicherweise mit einer Pumpe verbunden, welche an der kraftübertragenden Stelle der Lagereinrichtung ein Schmiermittel unter einem vorbestimmten Druck zuführt. Obwohl hier auf die Vorteile eines hydrodynamischen Gleitlagers im Vergleich zu Wälzlagern eingegangen worden ist, kann die oben beschriebene Lagereinrichtung selbstverständlich dennoch auch als Wälzlager oder Kugellager ausgebildet sein.

In dem Fall, dass die Lagereinrichtung als hydrodynamisches Gleitlager ausgebildet ist, kann eine Schmiermittelversorgungsleitung zu dem hydrodynamischen Gleitlager durch die Stelleinheit hindurch, insbesondere, im Falle einer Kolben-Zylinder-Anordnung als Stelleinheit, durch den Kolben hindurch, verlaufen. In einer besonderen Ausführungsform kann dies derart realisiert werden, dass der Kolben und eine zugehörige Kolbenstange der Kolben-Zylinder-Anordnung von einem Kanal durchsetzt sind, welcher sich zu einem Lagerspalt des hydrodynamischen Gleitlagers, das heißt einem Spalt zwischen dem kupplungsseitigen Abschnitt und dem gehäuseseitigen Abschnitt der Verlagerungseinrichtung, hin öffnet. Dabei können/kann der Kolben und/oder die Kolbenstange der Kolben-Zylinder-Anordnung auf einer in dem Zylinder der Kolben-Zylinder-Anordnung angeordneten Röhre gleitbar geführt sein, welche einen Abschnitt der Schmiermittelversorgungsleitung bildet. Der Kolben kann hierbei neben einer zwischen dem Zylinder und dem Kolben wirkenden Dichtung ferner eine zwischen dem Kolben und der Röhre wirkende Dichtung aufweisen. Auf diese Weise kann/können die Arbeitskammer(n) der Kolben-Zylinder-Anordnung zwar von der Röhre durchsetzt, in ihrer Funktion aber unbeeinträchtigt sein. Ferner kann die Röhre dazu eingerichtet sein, ein Reaktionsmoment des hydrodynamischen Gleitlagers aufzunehmen.

In einer Weiterbildung der vorliegenden Erfindung kann die Verlagerungseinrichtung einen Abschnitt umfassen, welcher zumindest teilweise durch das Turbinenrad hindurchtritt. So kann es gewährleistet werden, dass die Kupplung, welche insbesondere in einem Raum zwischen dem Pumpenrad und dem Turbinenrad angeordnet ist, von einer Stelleinheit betätigt werden kann, welche außerhalb dieses Raums angeordnet ist. Insbesondere kann dieser Abschnitt der Verlagerungseinrichtung das Turbinenrad an einer Position durchtreten, welche mit einer äußeren Umfangsfläche, in einer axialen Richtung entlang der Rotationsachse des Turbinenrads bzw. der Abtriebswelle gesehen, im Wesentlichen zusammenfallend ist. In anderen Worten kann ein Durchgangsloch durch das Turbinenrad zu der Rotationsachse des Turbinenrads bzw. der Abtriebswelle, deren Rotationsachsen insbesondere koaxial sind, einen inneren radialen Abstand aufweisen, welcher im Wesentlichen einem Radius der Abtriebswelle entspricht. Dies erlaubt es, das Leistungsübertragungssystem auch in einer zu der Rotationswelle radialen Richtung mit einem möglichst geringen Bauraum auszubilden.

Es sei an dieser Stelle darauf hingewiesen, dass im Zuge der vorliegenden Beschreibung der Ausdruck "Turbinenrad" nicht strikt auf einen Abschnitt zu begrenzen ist, an welchem Schaufeln des Turbinenrads angeordnet sind, sondern dies auch einen Turbinenradflansch umfassen kann, welcher den Schaufeln tragenden Abschnitt des Turbinenrads mit der Abtriebswelle verbindet.

Hierbei kann der durch das Turbinenrad hindurchtretende Abschnitt der Verlagerungseinrichtung als wenigstens ein Führungselement, insbesondere Stab ausgebildet sein, welcher insbesondere in einer durch das Turbinenrad verlaufenden Gleitbuchse gelagert ist. In dem Fall, dass die Verlagerungseinrichtung mehr als einen solchen Stab umfassen sollte, können diese Stäbe insbesondere in einem gleichen Winkelabstand um die Rotationsachse der Abtriebswelle bzw. des Turbinenrads herum angeordnet sein. Dies kann eine Verkippung der Kupplung reduzieren bzw. vermeiden.

Ferner kann eine zu dem Pumpenrad weisende Stirnfläche der Abtriebswelle im Wesentlichen frei von Elementen der Verlagerungseinrichtung sein. Wie bereits eingangs erwähnt, erlaubt es die vorliegende Erfindung, die Verlagerungseinrichtung zur Betätigung der Kupplung größtenteils, vorteilhafterweise vollständig, radial außerhalb der Abtriebswelle des Leistungsübertragungssystems anzuordnen. Somit kann die dem Turbinenrad zugeordnete Stirnfläche der Abtriebswelle derart ausgebildet sein, dass daran bzw., in einer in Bezug auf ihre Rotationsachse axialen Richtung gesehen, dazu benachbart keine Elemente der Verlagerungseinrichtung angeordnet sind.

In beispielhaften Ausführungsformen der vorliegenden Erfindung kann die Kupplung als eine Zahnkupplung, welche dazu eingerichtet ist, zwischen einem mit dem Pumpenrad verbundenen Zahnkranz und einem mit dem Turbinenrad verbundenen Zahnkranz zu verriegeln, oder als eine Lamellenkupplung ausgebildet sein, welche dazu eingerichtet ist, zwischen einem mit dem Pumpenrad verbundenen Lamellenpaket und einem mit dem Turbinenrad verbundenen Lamellenpaket zu verriegeln. Natürlich sind auch andere Kupplungsarten, beispielsweise unter Verwendung wenigstens einer Kette oder eines Riemens, zwischen Pumpenrad und Turbinenrad denkbar, jedoch haben sich Zahnkupplungen und Lamellenkupplungen in der Praxis bewährt.

Der Verlagerungseinrichtung kann außerdem ein Positionsüberwachungssystem zugeordnet sein, welches dazu eingerichtet ist, wenigstens einen aus dem eingegriffenen Zustand und dem entkoppelten Zustand der Kupplung zu erfassen und ein entsprechendes Signal auszugeben, wobei das Positionsüberwachungssystem vorteilhafterweise der Stelleinheit zugeordnet ist und dazu eingerichtet ist, wenigstens eine aus der vorgeschobenen Position und der zurückgezogenen Position zu erfassen. Das Positionsüberwachungssystem kann wenigstens einen Sensor umfassen, welcher beispielsweise als optischer Sensor, zum Beispiel in Form einer Lichtschranke, oder als Induktionssensor ausgebildet ist.

In einer reduzierten Ausführungsform kann das Positionsüberwachungssystem lediglich dazu eingerichtet sein, zu erfassen, ob sich die Stelleinheit in der vorgeschobenen Position befindet oder nicht. Dies kann beispielsweise durch eine Lichtschranke realisiert werden, welche von der Stelleinheit in der vorgeschobenen Position durchtreten wird. In einer weitergebildeten Ausführungsform kann das Positionsüberwachungssystem sowohl die vorgeschobene Position als auch die zurückgezogenen Position der Stelleinheit erfassen, um beispielsweise detektieren zu können, wenn sich die Stelleinheit nach einer vorbestimmten Zeit weder in der vorgeschobenen noch in der zurückgezogenen Position befindet, worauf hin das Positionsüberwachungssystem ein entsprechendes Fehlersignal ausgeben kann.

Die vorliegende Erfindung wird im Folgenden anhand eines Ausführungsbeispiels in größerem Detail mit Bezug auf die begleitenden Zeichnungen erläutert werden. Es stellt dar:
- Figur 1: eine Halb-Seitenquerschnittsansicht eines erfindungsgemäßen Leistungsübertragungssystems in einem ausgerückten Zustand;
- Figur 2: eine Halb-Seitenquerschnittsansicht des erfindungsgemäßen Leistungsübertragungssystems aus Figur 1 in einem eingerückten Zustand;
- Figur 3: eine schematische Halb-Seitenquerschnittsansicht einer Variante des erfindungsgemäßen Leistungsübertragungssystems;
- Figur 4: eine schematische Halb-Seitenquerschnittsansicht einer weiteren Variante des erfindungsgemäßen Leistungsübertragungssystems;
- Figur 5: eine schematische Halb-Seitenquerschnittsansicht einer weiteren Variante des erfindungsgemäßen Leistungsübertragungssystems.

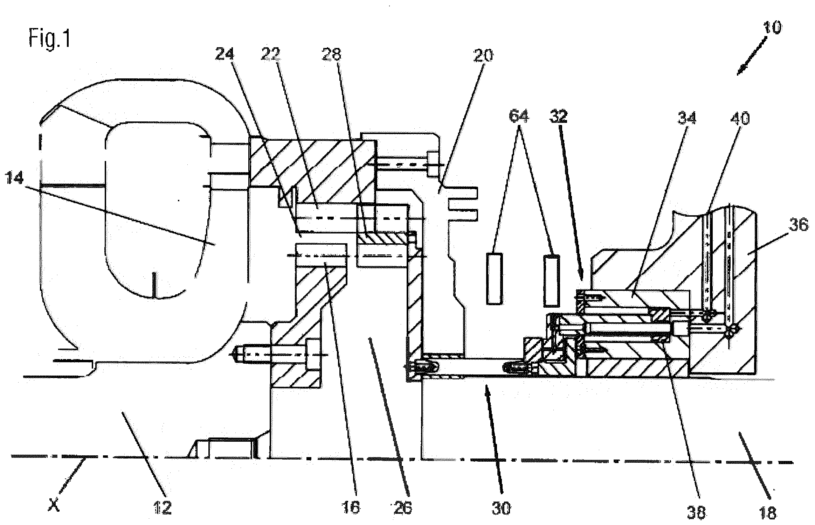

In Figur 1 ist ein erfindungsgemäßes Leistungsübertragungssystem in Form eines hydrodynamischen Getriebes, insbesondere hydrodynamischen Wandlers allgemein mit dem Bezugszeichen 10 bezeichnet. Der Wandler umfasst zumindest ein Pumpenrad 14, ein Turbinenrad 20 und ein Leitrad L. Das Leistungsübertragungssystem 10 umfasst eine Antriebswelle 12, welche wenigstens mittelbar drehfest, d.h vorzugsweise direkt oder über zwischengeordnete Elemente mit einem Pumpenrad 14 verbunden ist. Mit der Antriebswelle 12 ist in dem in Figur 1 dargestellten Ausführungsbeispiel ferner ein erster Zahnkranz 16 verbunden.

Ferner umfasst das Leistungsübertragungssystem 10 eine Abtriebswelle 18, welche wenigstens mittelbar drehfest, d.h. vorzugsweise direkt oder über zwischengeordnete Elemente mit einem Turbinenrad 20 und einem zweiten Zahnkranz 22 verbunden ist. Die jeweiligen Verzahnungen des ersten Zahnkranzes 16 und des zweiten Zahnkranzes 22 liegen einander in einer zu einer Rotationsachse X der Abtriebswelle 18, welche in dem hier dargestellten Ausführungsbeispiel mit der Rotationsachse der Antriebswelle 12 zusammenfällt, radialen Richtung unter Einhaltung eines Spalts 24 gegenüber. Innerhalb eines Raums 26, welche in axialer Richtung der Rotationsachse X zwischen dem Pumpenrad 14 und dem Turbinenrad 20 definiert ist, ist eine Zahnkupplung 28 angeordnet, welche dazu eingerichtet ist, den Spalt 24 derart überbrücken zu können, dass der erste Zahnkranz 16 mit dem zweiten Zahnkranz 22 formschlüssig verbunden werden kann.

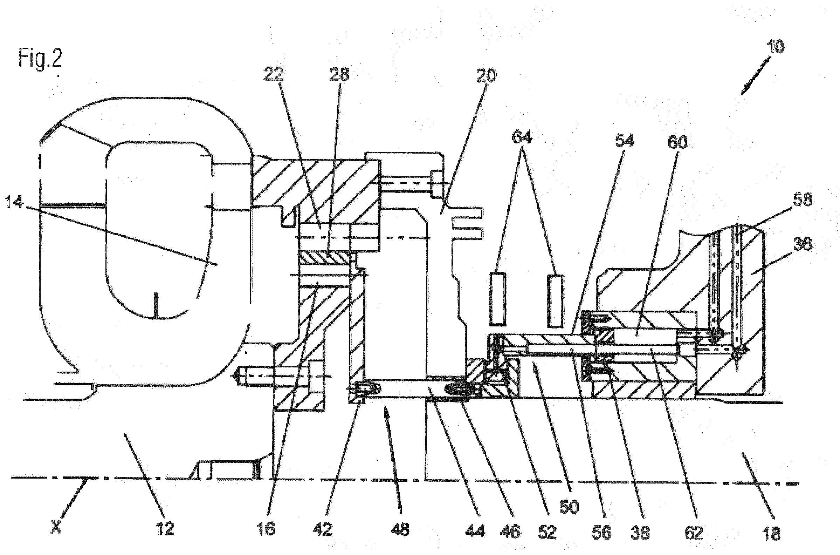

Um die Kupplung 28 zwischen einem zwischen dem ersten Zahnkranz 16 und dem zweiten Zahnkranz 22 eingegriffenen Zustand (siehe Figur 2) und einem von den beiden Zahnkränzen 16 und 22 entkoppelten Zustand (siehe Figur 1) zu verlagern, ist die Kupplung 28 mit einer Verlagerungseinrichtung 30 verbunden. An dem der Kupplung 28 entgegengesetzten Ende der Verlagerungseinrichtung 30 ist eine Stelleinheit 32 angeordnet, welche hier als eine Kolben-Zylinder-Anordnung ausgebildet ist, welche einen in dieser Ausführungsform ringförmigen Zylinder 34, welcher fest mit einem Gehäuse 36 des Leistungsübertragungssystems verbunden ist, und einen hier ringförmigen Kolben 38 umfasst, welcher in dem Zylinder 34 verlagerbar ist. Innerhalb des Gehäuses 36 verläuft ein Kanal 40, über welchen der Zylinder 34 mit Arbeitsmedium befüllt werden kann, um den Kolben 38 in dem Zylinder 34 verlagern zu können.

Mit Bezug nun auf Figur 2 ist ein Zustand des Leistungsübertragungssystems dargestellt, in welchem die Kupplung 28 das Pumpenrad 14, das heißt den ersten Zahnkranz 16, mit dem Turbinenrad 20, das heißt dem zweiten Zahnkranz 22, in einer kraftübertragenen Weise verbindet. Demzufolge rotiert ein mit der Kupplung 28 verbundener und sich radial zu der Rotationsachse X erstreckender Abschnitt 42 und ein daran angeordneter Abschnitt 44, welcher als Stab ausgebildet ist und sich parallel zur der Rotationsachse X erstreckt, zusammen mit der Antriebswelle 12 bzw. der Abtriebswelle 18. Der Stab 44 tritt dabei durch das Turbinenrad 20 innerhalb einer Gleitbuchse 46 hindurch.

Um den mit der Abtriebswelle 12 bzw. der Abtriebswelle 18 rotierenden kupplungsseitigen Abschnitt 48 der Verlagerungseinrichtung 30 von dem gehäuseseitigen Abschnitt 50 der Verlagerungseinrichtung 30, welcher mit der Stelleinheit 32 verbunden ist rotatorisch zu entkoppeln, umfasst die Verlagerungseinrichtung 30 eine Lagereinrichtung 52, welche hier als hydrodynamisches Gleitlager 52 ausgebildet ist. Wie in den Figuren 1 und 2 zu erkennen, ist die Lagereinrichtung 52 so ausgebildet, dass sie eine relative Rotationsbewegung des kupplungsseitigen Abschnitts 48 der Verlagerungseinrichtung 30 relativ zu dem gehäuseseitigen Abschnitt 50 der Verlagerungseinrichtung 30 zulässt, jedoch eine durch die Stelleinheit 32 hervorgerufene und zu der Rotationsachse X parallele Verlagerung des gehäuseseitigen Abschnitts 50 auf den kupplungsseitigen Abschnitt 48 der Verlagerungseinrichtung und damit auf die Kupplung 28 überträgt.

Es ist ferner zu erkennen, dass der Kolben 38 und eine mit dem Kolben 38 verbundene Kolbenstange 54 von einem Kanal 56 durchsetzt sind, welcher sich zu einer Lagerfläche der Lagereinrichtung 52 hin öffnet, um diesen mit Schmiermittel zu versorgen, welches über einen entsprechenden durch das Gehäuse 36 verlaufenden Kanal 58 bereitgestellt wird. Damit das Schmiermittel durch eine entsprechende Arbeitskammer 60 des Zylinders 34 geleitet werden kann, ist in der Arbeitskammer 60 eine Röhre 62 angeordnet, deren Inneres mit dem Kanal 56 des Kolbens 38 bzw. der Kolbenstange 54 in Verbindung steht und auf deren Außenseite der Kolben 38 bzw. die Kolbenstange 54 gleitbar angeordnet ist/sind.

Mit dem Bezugszeichen 64 ist in den Figuren 1 und 2 ein Positionsüberwachungssystem bezeichnet, welches in dem dargestellten Ausführungsbeispiel, zum Beispiel unter Verwendung von zwei entsprechenden Sensoren, dazu eingerichtet ist, die in Figur 1 dargestellte zurückgezogene Position der Stelleinheit 32, und somit den in Figur 1 dargestellten entkoppelten (ausgerückten) Zustand der Kupplung 28, und die in Figur 2 dargestellte vorgeschobene Position der Stelleinheit 32, und somit den in Figur 2 dargestellten eingegriffenen (eingerückten) Zustand der Kupplung 28, zu erfassen.

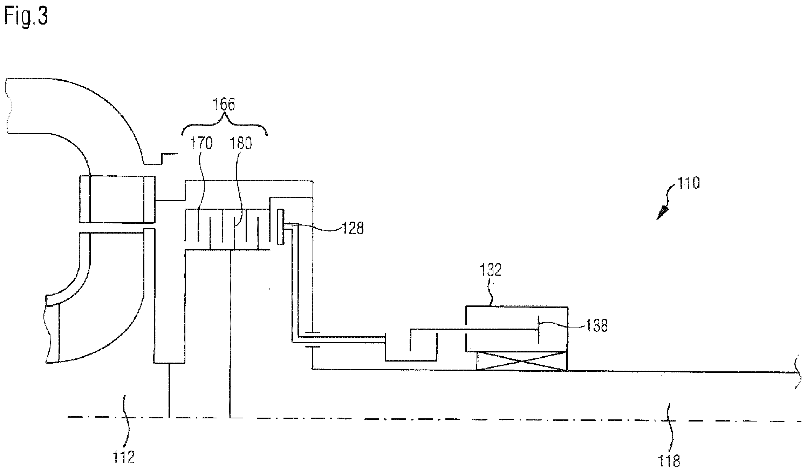

Figur 3 zeigt eine Variante des erfindungsgemäßen Leistungsübertragungssystems 10 der Figuren 1 und 2. Daher sind in Figur 3 gleiche Elemente wie die des erfindungsgemäßen Leistungsübertragungssystems 10 der Figuren 1 und 2 mit gleichen Bezugszeichen bezeichnet, jedoch erhöht um die Zahl 100. Sämtliche mit Bezug auf die in den Figuren 1 und 2 beschriebene Ausführungsform sind auch auf die Variante der Figur 3 anwendbar, und umgekehrt.

Das Leistungsübertragungssystem 110 der Figur 3 weist statt der beiden Zahnkränze 16 und 22 ein Lamellenpaket 166 auf, wobei das Lamellenpaket 166 einen Satz von mit der Antriebswelle 112 verbundenen Lamellen 168 und einen Satz von mit der Abtriebswelle 118 verbundenen Lamellen 170 umfasst. Die Kupplung 128 ist in Figur 3 in der ausgerückten, das heißt entkoppelten, Stellung dargestellt, so dass eine Rotation des Satzes von mit der Antriebswelle 112 verbundenen Lamellen 168 nicht auf den Satz von mit der Abtriebswelle 118 verbundenen Lamellen 170 übertragen wird. Wird die Stelleinheit 132 derart betätigt, dass der darin angeordneter Kolben 138 in Figur 3 nach links verlagert wird, so wird durch die Kupplung 128 Druck auf das Lamellenpaket 166 derart ausgeübt, dass eine Rotation von der Antriebswelle 112 auf die Abtriebswelle 118 übertragen werden kann.

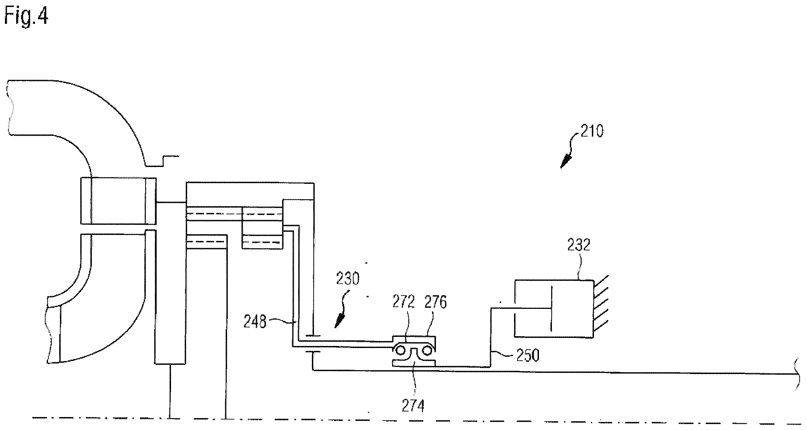

Figur 4 zeigt eine weitere Variante des erfindungsgemäßen Leistungsübertragungssystems 10 der Figuren 1 und 2. Daher sind in Figur 4 gleiche Elemente wie die des erfindungsgemäßen Leistungsübertragungssystems 10 der Figuren 1 und 2 mit gleichen Bezugszeichen bezeichnet, jedoch erhöht um die Zahl 200. Sämtliche mit Bezug auf die in den Figuren 1 bis 3 beschriebenen Ausführungsformen sind auch auf die Variante der Figur 4 anwendbar, und umgekehrt.

Das Leistungsübertragungssystem 210 der Figur 4 weist statt dem hydrodynamischen Gleitlager 52 der Figuren 1 und 2 ein Wälzlager 272 auf. Das Wälzlager 272 ist dazu eingerichtet, die von der Stelleinheit 232 in die Verlagerungseinrichtung 230 eingebrachten Zug- und Druckkräfte zu übertragen. In dem in Figur 4 dargestellten Ausführungsbeispiel ist das Wälzlager 272 als ein zweireihiges Kugellager ausgebildet. Ferner ist in dem in Figur 4 dargestellten Ausführungsbeispiel ein innerer Ring 274 mit dem gehäuseseitigen Abschnitt 250 verbunden und ein äußerer Ring 276 ist mit dem kupplungsseitigen Abschnitt 248 verbunden.

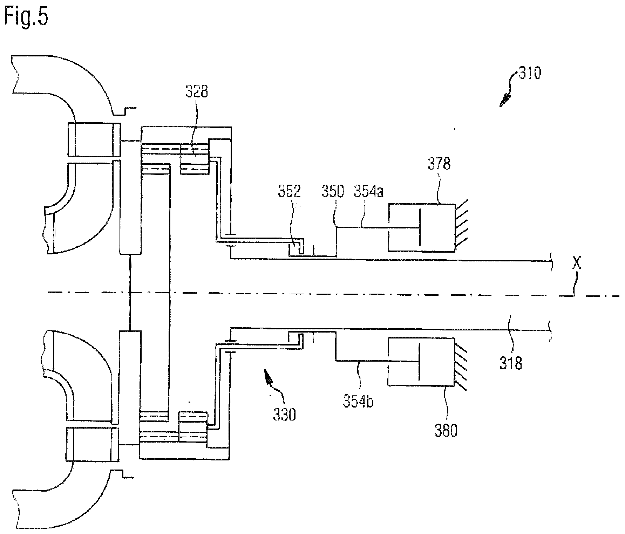

Figur 5 zeigt noch eine weitere Variante des erfindungsgemäßen Leistungsübertragungssystems 10 der Figuren 1 und 2. Daher sind in Figur 5 gleiche Elemente wie die des erfindungsgemäßen Leistungsübertragungssystems 10 der Figuren 1 und 2 mit gleichen Bezugszeichen bezeichnet, jedoch erhöht um die Zahl 300. Sämtliche mit Bezug auf die in den Figuren 1 bis 4 beschriebenen Ausführungsformen sind auch auf die Variante der Figur 5 anwendbar, und umgekehrt.

Das Leistungsübertragungssystem 310 der Figur 5 weist statt dem in den Figuren 1 und 2 dargestellten doppeltwirkenden Ringzylinder 34 der Stelleinheit 32 zwei voneinander getrennte, ebenfalls doppeltwirkende, Stellglieder 378 und 380 auf, welche jeweils als Kolben-ZylinderAnordnungen ausgebildet und zu einer Rotationsachse X der Abtriebswelle 318 diametral gegenüberliegend angeordnet sind. Jeweilige Kolbenstangen 354a und 354b der Stellglieder 378 und 380 sind mit dem gehäuseseitigen Abschnitt 350 der Verlagerungseinrichtung 330 verbunden, um Betätigungen der Stellglieder 378 und 380 über das hydrodynamische Gleitlager 352 auf die Kupplung 328 zu übertragen.

In der in Figur 5 dargestellten Variante des erfindungsgemäßen Leistungsübertragungssystems 310 ist der gehäuseseitige Abschnitt 350 der Verlagerungseinrichtung 330 mit einer zu der Rotationsachse X radial inneren Komponente des hydrodynamischen Gleitlagers 352 verbunden, so dass es, je nach Ausbildung des gehäuseseitigen Abschnitts 350 der Verlagerungseinrichtung 330, vorteilhaft sein kann, eine Schmiermittelversorgung des hydrodynamischen Gleitlagers 352 über eine von den Kolbenstangen 354a, 354b getrennte Leitung zu realisieren. Selbstverständlich kann die Schmiermittelversorgung auch über wenigstens eine der Kolbenstangen 354a, 354b verlaufend ausgebildet werden bzw. der gehäuseseitige Abschnitt 350 der Verlagerungseinrichtung 330 kann alternativ auch mit einer radial äußeren Komponente des hydrodynamischen Gleitlagers 352 verbunden sein, so wie in den Figuren 1 und 2 dargestellt.

## Patentansprüche

1. Leistungsübertragungssystem (10), insbesondere hydrodynamisches Getriebe, umfassend
eine Antriebswelle (12), welche mit einem Pumpenrad (14) drehfest verbunden ist, und
eine Abtriebswelle (18), welche mit einem Turbinenrad (20) drehfest verbunden ist,
wobei das Leistungsübertragungssystem (10) einen ersten Betriebszustand aufweist, in welchem das Pumpenrad (14) relativ zu dem Turbinenrad (20) rotierbar ist und das Pumpenrad (14) und das Turbinenrad (20) über einen gemeinsamen Strömungskreislauf, in welchem ein Arbeitsmedium vorhanden ist, im Sinne einer hydrodynamisch arbeitenden Maschine fluidisch verbunden sind,
wobei das Leistungsübertragungssystem (10) ferner einen zweiten Betriebszustand aufweist, in welchem eine zwischen dem Pumpenrad (14) und dem Turbinenrad (20) wirkende Kupplung (28) in ihrem eingegriffenen Zustand dazu eingerichtet ist, das Pumpenrad (14) und das Turbinenrad (20) miteinander zu verriegeln, und
wobei eine Verlagerungseinrichtung (30), welche dazu eingerichtet ist, die Kupplung (28) zwischen dem eingegriffenen Zustand und einem dem ersten Betriebszustand des Leistungsübertragungssystems (10) zugeordneten entkoppelten Zustand zu verlagern, zumindest entlang der axialen Erstreckung der Abtriebswelle (18) radial außerhalb der Abtriebswelle (18) angeordnet ist **dadurch gekennzeichnet, dass** die Verlagerungseinrichtung (30) wenigstens eine Lagereinrichtung (52) umfasst, welche einen kupplungsseitigen Abschnitt (48) der Verlagerungseinrichtung (30) relativ zu einem gehäuseseitigen Abschnitt (50) der Verlagerungseinrichtung (30) drehbar lagert.

2. Leistungsübertragungssystem (10) nach Anspruch 1,
**dadurch gekennzeichnet, dass** die Verlagerungseinrichtung (30) wenigstens eine mit der Kupplung (28) verbundene Stelleinheit (32) umfasst, welche dazu eingerichtet ist, zwischen einer vorgeschobenen Position, welche dem eingegriffenen Zustand der Kupplung (28) zugeordnet ist, und einer zurückgezogenen Position zu verlagern, welche dem entkoppelten Zustand der Kupplung (28) zugeordnet ist, wobei die Stelleinheit (32) relativ zu einem Gehäuse (36) des Leistungsübertragungssystems (10) fest verbunden ist.

3. Leistungsübertragungssystem (10) nach Anspruch 2,
**dadurch gekennzeichnet, dass** die Stelleinheit (32) als, insbesondere hydraulisch betätigbare, vorteilhafterweise ringförmige, Kolben-Zylinder-Anordnung ausgebildet ist.

4. Leistungsübertragungssystem (10) nach Anspruch 2 oder 3,
**dadurch gekennzeichnet, dass** eine Betätigungsrichtung der Stelleinheit (32), entlang welcher sich die Stelleinheit (32) zwischen der vorgeschobenen Position und der zurückgezogenen Position verlagert, im Wesentlichen parallel zu einer Rotationsachse (X) der Abtriebswelle (18) und/oder der Antriebswelle (12) ist.

5. Leistungsübertragungssystem (10) nach einem der Ansprüche 2 bis 4, **dadurch gekennzeichnet, dass** die Stelleinheit (32) ein erstes und ein zweites Stellglied umfasst, wobei das erste Stellglied dazu eingerichtet ist, die Kupplung (28) in die eingegriffene Position zu verlagern, und das zweite Stellglied dazu eingerichtet ist, die Kupplung (28) in die entkoppelte Position zu verlagern, und/oder
dass die Stelleinheit (32) als wenigstens ein doppeltwirkendes Stellglied, beispielsweise als eine doppeltwirkende Kolben-Zylinder-Anordnung, ausgebildet ist, welche sowohl dazu eingerichtet ist, die Kupplung (28) in die eingegriffene Position zu verlagern, als auch dazu eingerichtet ist, die Kupplung (28) in die entkoppelte Position zu verlagern.

6. Leistungsübertragungssystem (10) nach einem der Ansprüche 2 bis 5,
**dadurch gekennzeichnet, dass** die Stelleinheit (32) wenigstens zwei Stellglieder umfasst, welche entlang einer Umfangsrichtung der Abtriebswelle (18) zueinander im Wesentlichen gleichbeabstandet angeordnet sind.

7. Leistungsübertragungssystem (10) nach Anspruch 7,
**dadurch gekennzeichnet, dass** die Lagereinrichtung (52) dazu eingerichtet ist, eine Kraft zwischen dem kupplungsseitigen Abschnitt (48) der Verlagerungseinrichtung (30) und dem gehäuseseitigen Abschnitt (50) der Verlagerungseinrichtung (30) zu übertragen, welche im Wesentlichen parallel zu einer Drehachse (X) der Lagereinrichtung (52) verläuft.

8. Leistungsübertragungssystem (10) nach Anspruch 7 oder 8,
**dadurch gekennzeichnet, dass** die Lagereinrichtung (52) als hydrodynamisches Gleitlager (52) ausgebildet ist.

9. Leistungsübertragungssystem (10) nach Anspruch 9, gegebenenfalls nach Anspruch 3,
**dadurch gekennzeichnet, dass** eine Schmiermittelversorgungsleitung (58) zu dem hydrodynamischen Gleitlager (52) durch die Stelleinheit (32) hindurch, insbesondere, im Falle einer Kolben-Zylinder-Anordnung als Stelleinheit (32), durch den Kolben (38) hindurch, verläuft, wobei vorteilhafterweise die Schmiermittelversorgungsleitung (58) dazu eingerichtet ist, durch das hydrodynamische Gleitlager (52) hervorgerufene Reaktionskräfte aufzunehmen.

10. Leistungsübertragungssystem (10) nach einem der vorhergehenden Ansprüche,
**dadurch gekennzeichnet, dass** die Verlagerungseinrichtung (30) einen Abschnitt (44) umfasst, welcher zumindest teilweise durch das Turbinenrad (20) hindurchtritt.

11. Leistungsübertragungssystem (10) nach Anspruch 10,
**dadurch gekennzeichnet, dass** der durch das Turbinenrad (20) hindurchtretende Abschnitt (44) der Verlagerungseinrichtung (30) als wenigstens ein Stab ausgebildet ist, welcher insbesondere in einer durch das Turbinenrad (20) verlaufenden Gleitbuchse (46) gelagert ist.

12. Leistungsübertragungssystem (10) nach einem der vorhergehenden Ansprüche,
**dadurch gekennzeichnet, dass** eine zu dem Pumpenrad (14) weisende Stirnfläche der Abtriebswelle (18) im Wesentlichen frei von Elementen der Verlagerungseinrichtung (30) ist.

13. Leistungsübertragungssystem (10) nach einem der vorhergehenden Ansprüche,
**dadurch gekennzeichnet, dass** die Kupplung (28) als eine Zahnkupplung, welche dazu eingerichtet ist, zwischen einem mit dem Pumpenrad (14) verbundenen Zahnkranz (16) und einem mit dem Turbinenrad (20) verbundenen Zahnkranz (22) zu verriegeln, oder als eine Lamellenkupplung ausgebildet ist, welche dazu eingerichtet ist, zwischen einem mit dem Pumpenrad (14) verbundenen Lamellenpaket und einem mit dem Turbinenrad (20) verbundenen Lamellenpaket zu verriegeln.

14. Leistungsübertragungssystem (10) nach einem der vorhergehenden Ansprüche, gegebenenfalls nach Anspruch 2,
**dadurch gekennzeichnet, dass** der Verlagerungseinrichtung (30) ein Positionsüberwachungssystem (64) zugeordnet ist, welches dazu eingerichtet ist, wenigstens einen aus dem eingegriffenen Zustand und dem entkoppelten Zustand der Kupplung (28) zu erfassen und ein entsprechendes Signal auszugeben, wobei das Positionsüberwachungssystem (64) vorteilhafterweise der Stelleinheit (32) zugeordnet ist und dazu eingerichtet ist, wenigstens eine aus der vorgeschobenen Position und der zurückgezogenen Position zu erfassen.

15. Leistungsübertragungssystem (10) nach einem der vorhergehenden Ansprüche,
**dadurch gekennzeichnet,**
**dass** das hydrodynamische Getriebe als hydrodynamischer Wandler, umfassend ein Pumpenrad, Turbinenrad und zumindest ein Leitrad ausgebildet ist.

## Claims

1. Power transmission system (10), in particular hydrodynamic transmission, comprising
a drive shaft (12), which is connected to a pump impeller (14) for conjoint rotation, and
an output shaft (18), which is connected to a turbine wheel (20) for conjoint rotation,
wherein the power transmission system (10) has a first operating state, in which the pump impeller (14) is rotatable relative to the turbine wheel (20), and the pump impeller (14) and the turbine wheel (20) are fluidically connected via a common flow circuit, in which there is a working medium, in the sense of a hydrodynamically operating machine,
wherein the power transmission system (10) furthermore has a second operating state, in which a clutch (28) acting between the pump impeller (14) and the turbine wheel (20) is configured in its engaged state to lock the pump impeller (14) and the turbine wheel (20) to each other, and
wherein a displacement device (30), which is configured to shift the clutch (28) between the engaged state and a decoupled state associated with the first operating state of the power transmission system (10), is arranged radially outside the output shaft (18) at least along the axial extent of the output shaft (18), **characterized in that** the displacement device (30) comprises at least one bearing device (52) which rotatably mounts a clutch-side portion (48) of the displacement device (30) relative to a housing-side portion (50) of the displacement device (30) .

2. Power transmission system (10) according to Claim 1,
**characterized in that** the displacement device (30) comprises at least one actuating unit (32) which is connected to the clutch (28) and is configured to shift between a pushed-forward position, which is associated with the engaged state of the clutch (28), and a pulled-back position, which is associated with the decoupled state of the clutch (28),
wherein the actuating unit (32) is fixedly connected relative to a housing (36) of the power transmission system (10).

3. Power transmission system (10) according to Claim 2,
**characterized in that** the actuating unit (32) is in the form of an advantageously annular piston-cylinder arrangement which is in particular hydraulically activatable.

4. Power transmission system (10) according to Claim 2 or 3,
**characterized in that** an activation direction of the actuating unit (32), along which the actuating unit (32) shifts between the pushed-forward position and the pulled-back position, is substantially parallel to an axis of rotation (X) of the output shaft (18) and/or of the drive shaft (12).

5. Power transmission system (10) according to one of Claims 2 to 4,
**characterized in that** the actuating unit (32) comprises a first and a second actuating member, wherein the first actuating member is configured to shift the clutch (28) into the engaged position, and the second actuating member is configured to shift the clutch (28) into the decoupled position, and/or
**in that** the actuating unit (32) is in the form of at least one double-action actuating member, for example as a double-action piston-cylinder arrangement, which is both configured to shift the clutch (28) into the engaged position and is also configured to shift the clutch (28) into the decoupled position.

6. Power transmission system (10) according to one of Claims 2 to 5, **characterized in that** the actuating unit (32) comprises at least two actuating members which are arranged substantially uniformly spaced from one another along a circumferential direction of the output shaft (18) .

7. Power transmission system (10) according to Claim 7,
**characterized in that** the bearing device (52) is configured to transmit a force between the clutch-side portion (48) of the displacement device (30) and the housing-side portion (50) of the displacement device (30), which force runs substantially parallel to an axis of rotation (X) of the bearing device (52).

8. Power transmission system (10) according to Claim 7 or 8,
**characterized in that** the bearing device (52) is in the form of a hydrodynamic plain bearing (52).

9. Power transmission system (10) according to Claim 9, optionally according to Claim 3,
**characterized in that** a lubricant supply line (58) to the hydrodynamic plain bearing (52) runs through the actuating unit (32), in particular, in the event of a piston-cylinder arrangement as the actuating unit (32), through the piston (38), wherein advantageously the lubricant supply line (58) is configured to absorb reaction forces caused by the hydrodynamic plain bearing (52) .

10. Power transmission system (10) according to one of the preceding claims,
**characterized in that** the displacement device (30) comprises a portion (44) which at least partially passes through the turbine wheel (20).

11. Power transmission system (10) according to Claim 10,
**characterized in that** that portion (44) of the displacement device (30) which passes through the turbine wheel (20) is in the form of at least one rod which is mounted in particular in a slide bushing (46) running through the turbine wheel (20).

12. Power transmission system (10) according to one of the preceding claims,
**characterized in that** an end face of the output shaft (18) facing the pump impeller (14) is substantially free from elements of the displacement device (30).

13. Power transmission system (10) according to one of the preceding claims,
**characterized in that** the clutch (28) is in the form of a tooth clutch, which is configured to lock between a toothed ring (16) connected to the pump impeller (14) and a toothed ring (22) connected to the turbine wheel (20), or is in the form of a multi-disc clutch, which is configured to lock between a disc pack connected to the pump impeller (14) and a disc pack connected to the turbine wheel (20).

14. Power transmission system (10) according to one of the preceding claims, optionally according to Claim 2, **characterized in that** the displacement device (30) is assigned a position monitoring system (64) which is designed to detect at least one state out of the engaged state and the decoupled state of the clutch (28) and to output a corresponding signal, wherein the position monitoring system (64) is advantageously assigned to the actuating unit (32) and is configured to detect at least one position out of the pushed-forward position and the pulled-back position.

15. Power transmission system (10) according to one of the preceding claims,
**characterized**
**in that** the hydrodynamic transmission is in the form of a hydrodynamic converter, comprising a pump impeller, a turbine wheel and at least one guide wheel.

## Revendications

1. Système de transmission de puissance (10), en particulier transmission hydrodynamique, comprenant
un arbre d'entraînement (12), lequel est relié de manière solidaire en rotation à une roue de pompe (14), et
un arbre de sortie (18), lequel est relié de manière solidaire en rotation à une roue de turbine (20),
le système de transmission de puissance (10) présentant un premier état de fonctionnement, dans lequel la roue de pompe (14) peut tourner par rapport à la roue de turbine (20) et la roue de pompe (14) et la roue de turbine (20) sont reliées de manière fluidique au sens d'une machine fonctionnant de manière hydrodynamique, par le biais d'un circuit d'écoulement commun dans lequel un fluide de travail est présent,
le système de transmission de puissance (10) présentant en outre un deuxième état de fonctionnement, dans lequel un embrayage (28) agissant entre la roue de pompe (14) et la roue de turbine (20) est conçu, dans son état embrayé, pour verrouiller la roue de pompe (14) et la roue de turbine (20) l'une avec l'autre, et
un dispositif de déplacement (30), lequel est conçu pour déplacer l'embrayage (28) entre l'état embrayé et un état désaccouplé associé au premier état de fonctionnement du système de transmission de puissance (10), étant disposé radialement à l'extérieur de l'arbre de sortie (18) au moins le long de l'étendue axiale de l'arbre de sortie (18), **caractérisé en ce que** le dispositif de déplacement (30) comprend au moins un dispositif palier (52), lequel supporte de manière rotative une partie (48) côté embrayage du dispositif de déplacement (30) par rapport à une partie (50) côté carter du dispositif de déplacement (30).

2. Système de transmission de puissance (10) selon la revendication 1,
**caractérisé en ce que** le dispositif de déplacement (30) comprend au moins une unité de réglage (32) reliée à l'embrayage (28), laquelle est conçue pour se déplacer entre une position avancée, laquelle est associée à l'état embrayé de l'embrayage (28), et une position en retrait, laquelle est associée à l'état désaccouplé de l'embrayage (28), l'unité de réglage (32) étant reliée fixement par rapport à un carter (36) du système de transmission de puissance (10).

3. Système de transmission de puissance (10) selon la revendication 2,
**caractérisé en ce que** l'unité de réglage (32) est réalisée sous forme d'ensemble piston-cylindre avantageusement annulaire, en particulier pouvant être actionné de manière hydraulique.

4. Système de transmission de puissance (10) selon la revendication 2 ou 3,
**caractérisé en ce qu'**une direction d'actionnement de l'unité de réglage (32), le long de laquelle l'unité de réglage (32) se déplace entre la position avancée et la position en retrait, est sensiblement parallèle à un axe de rotation (X) de l'arbre de sortie (18) et/ou de l'arbre d'entraînement (12).

5. Système de transmission de puissance (10) selon l'une des revendications 2 à 4,
**caractérisé en ce que** l'unité de réglage (32) comprend un premier et un deuxième organe de réglage, le premier organe de réglage étant conçu pour déplacer l'embrayage (28) dans la position embrayée, et le deuxième organe de réglage étant conçu pour déplacer l'embrayage (28) dans la position désaccouplée, et/ou
**en ce que** l'unité de réglage (32) est réalisée sous la forme d'au moins un organe de réglage à double action, par exemple sous la forme d'un ensemble piston-cylindre à double action, lequel est conçu aussi bien pour déplacer l'embrayage (28) dans la position embrayée que pour déplacer l'embrayage (28) dans la position désaccouplée.

6. Système de transmission de puissance (10) selon l'une des revendications 2 à 5,
**caractérisé en ce que** l'unité de réglage (32) comprend au moins deux organes de réglage, lesquels sont disposés de manière sensiblement équidistante les uns par rapport aux autres le long d'une direction périphérique de l'arbre de sortie (18).

7. Système de transmission de puissance (10) selon la revendication 7,
**caractérisé en ce que** le dispositif palier (52) est conçu pour transmettre une force entre la partie (48) côté embrayage du dispositif de déplacement (30) et la partie (50) côté carter du dispositif de déplacement (30), laquelle force s'étend sensiblement parallèlement à un axe de rotation (X) du dispositif palier (52).

8. Système de transmission de puissance (10) selon la revendication 7 ou 8,
**caractérisé en ce que** le dispositif palier (52) est réalisé sous forme de palier lisse hydrodynamique (52).

9. Système de transmission de puissance (10) selon la revendication 9, éventuellement selon la revendication 3,
**caractérisé en ce qu'**une conduite d'alimentation en lubrifiant (58) s'étend jusqu'au palier lisse hydrodynamique (52) à travers l'unité de réglage (32), en particulier à travers le piston (38), dans le cas d'un ensemble piston-cylindre en tant qu'unité de réglage (32), la conduite d'alimentation en lubrifiant (58) étant avantageusement conçue pour absorber des forces de réaction produites par le palier lisse hydrodynamique (52) .

10. Système de transmission de puissance (10) selon l'une des revendications précédentes,
**caractérisé en ce que**
le dispositif de déplacement (30) comprend une partie (44), laquelle passe au moins partiellement à travers la roue de turbine (20) .

11. Système de transmission de puissance (10) selon la revendication 10,
**caractérisé en ce que** la partie (44), passant à travers la roue de turbine (20), du dispositif de déplacement (30) est réalisée sous la forme d'au moins une tige, laquelle est en particulier montée dans une douille de glissement (46) s'étendant à travers la roue de turbine (20) .

12. Système de transmission de puissance (10) selon l'une des revendications précédentes,
**caractérisé en ce**
**qu'**une face frontale, tournée vers la roue de pompe (14), de l'arbre de sortie (18) est sensiblement dépourvue d'éléments du dispositif de déplacement (30).

13. Système de transmission de puissance (10) selon l'une des revendications précédentes,
**caractérisé en ce que**
l'embrayage (28) est réalisé sous la forme d'un embrayage à denture, lequel est conçu pour se verrouiller entre une couronne dentée (16) reliée à la roue de pompe (14) et une couronne dentée (22) reliée à la roue de turbine (20), ou sous la forme d'un embrayage à disques, lequel est conçu pour se verrouiller entre un jeu de disques relié à la roue de pompe (14) et un jeu de disques relié à la roue de turbine (20).

14. Système de transmission de puissance (10) selon l'une des revendications précédentes, éventuellement selon la revendication 2,
**caractérisé en ce**
**qu'**un système de surveillance de position (64) est associé au dispositif de déplacement (30), lequel système de surveillance de position est conçu pour détecter au moins un état parmi l'état embrayé et l'état désaccouplé de l'embrayage (28) et pour délivrer un signal correspondant, le système de surveillance de position (64) étant avantageusement associé à l'unité de réglage (32) et étant conçu pour détecter au moins une position parmi la position avancée et la position en retrait.

15. Système de transmission de puissance (10) selon l'une des revendications précédentes,
**caractérisé en ce que**
la transmission hydrodynamique est réalisée sous forme de convertisseur hydrodynamique, comprenant une roue de pompe, une roue de turbine et au moins un stator.
